# EUROPÄISCHE PATENTSCHRIFT

(11) **EP 1 398 253 B1**
(45) Veröffentlichungstag und Bekanntmachung des Hinweises auf die Patenterteilung: **17.05.2006**
(21) Anmeldenummer: 03018972.4
(22) Anmeldetag: 21.08.2003
(51) Int. Cl.: B62D 61/12

(54) **Nutzfahrzeug mit einer dessen Hinterachse beigeordneter ungelenkter, liftbarer Vor-oder Nachlaufachse**
Utility vehicle with an retractable, non-steered rear axle being a part of a rear axle set
Véhicule utilitaire avec un essieu rétractable arrière non-directionel

(30) Priorität: 11.09.2002 DE 10241994
(43) Veröffentlichungstag der Anmeldung: 17.03.2004
(73) Patentinhaber: MAN Nutzfahrzeuge Aktiengesellschaft, 80976 München (DE)
(72) Erfinder: Greinöcker, Wolfgang, Dipl.-Ing. (FH), 85551 Kirchheim (DE)

(56) Entgegenhaltungen:
- GB-A- 2 282 111
- US-A- 4 854 409
- US-A1- 2002 117 823
- US-A1- 2003 151 222
- US-B1- 6 240 339

## Beschreibung

Die Erfindung betrifft gemäß dem Oberbegriff des Anspruchs 1 ein Nutzfahrzeug mit den angegebenen Merkmalen und gemäß dem Oberbegriff des Anspruchs 2 ein Verfahren zum Betrieb eines entsprechend definierten Nutzfahrzeuges.

Es ist üblich, Nutzfahrzeuge zur Sicherstellung einer hohen Zuladung dann, wenn diese mit einer Hinterachse alleine nicht tragbar ist, mit lenkbaren und zudem liftbaren Vor- oder Nachlaufachsen auszurüsten. Dies bedingt bei der Vor- oder Nachlaufachse einen hohen lenktechnischen Aufwand, der sich auch kostenmäßig erheblich auswirkt. Die Lenkung der Vor- oder Nachlaufachse wird deswegen vorgesehen, weil bei ungelenkten Vor- oder Nachlaufachsen der Reifenverschleiß beim Rangieren, Durchfahren enger Kurven und Wendemanövern sehr hoch ist. Durch die Achsverzwängung wird außerdem die Fahrbahn beschädigt.

Nun ist zwar aus der US 6240339 B1, von der die Erfindung ausgeht, schon bekannt, bei einem Fahrzeug mit lenkbaren Vorderrädern und einer Hinterachse mit zugeordneter Nachlaufachse bei einer bestimmten, zwischen 10 und 15 miles/h liegenden Geschwindigkeit und einem bestimmten Lenkeinschlag der Vorderräder von z. B. 5° die Nachlaufachse zu entlasten. Eine Entlastung der Nachlaufachse bei dieser Geschwindigkeit erscheint insbesondere bei maximaler Beladung des Nutzfahrzeugs sehr problematisch, denn sie birgt deswegen ein hohes Gefahrenpotential, weil die Reifen der anderen Hinterachse(n) dann wegen gewichtsmäßiger Überlastung heiß laufen und zu brennen anfangen oder platzen könnten.

Des Weiteren sei noch erwähnt, dass bei einem aus der US 2002/0117823 A1 bekannten Truck eine benachbart zu einer Hinterachse angeordnete liftbare Vorderachse vorgesehen ist, die mittels einer Steuereinrichtung bei Rückwärtsfahrt automatisch in ihre Liftposition überführt wird. Eine solche Steuerung ist jedoch nicht Gegenstand der Erfindung.

Ferner ist es bei einem aus der GB 2282111 bekannten Fahrzeug für einen Fahrer möglich, durch Betätigung eines bestimmten Schalters oder bei Einlegen des Rückwärtsganges während eines Rangiervorganges eine von mehreren Tragachsen zu liften, und zwar für eine bestimmte Zeit von beispielsweise 1 Minute. Anschließend wird die geliftete Achse wieder abgesenkt.

Es ist demgegenüber Aufgabe der Erfindung, eine Lösung zu schaffen, mit der bei Nutzfahrzeugen der gattungsgemäßen Art, die mit ungelenkten Vor- oder Nachlaufachsen ausgerüstet sind, die Abnutzung von deren Reifen nennenswert reduzierbar ist, dabei aber sichergestellt bleibt, dass das Aufheben der Mittragfunktion der Vor- oder Nachlaufachse keine nachteiligen Auswirkungen am Nutzfahrzeug hervorruft.

Diese Aufgabe ist bei einem gattungsgemäßen Nutzfahrzeug erfindungsgemäß durch die im Kennzeichen des Anspruchs 1 angegebenen Merkmale und des Weiteren erfindungsgemäß durch ein Verfahren zum Betrieb eines Nutzfahrzeuges mit den im Anspruch 2 angegebenen Merkmalen gelöst.

Die Erfindung besteht vorrichtungsmäßig darin, im Nutzfahrzeug Mittel vorzusehen, mit denen ein Rangierbetrieb, außerdem eine unterhalb einer festgelegten Schwelle liegende Fahrgeschwindigkeit und ein über einem festgelegten Wert liegender Lenkeinschlag der Vorderräder erkannt wird. Wenn die drei Kriterien - eingelegter Gang, Geschwindigkeit, Lenkeinschlag der Vorderräder - als Indikation für einen Rangierbetrieb vorliegen, dann wird die Mittragfunktion der Vor- oder Nachlaufachse aufgehoben und diese in eine angehobene Position gebracht, in der deren Räder außer Kontakt mit der Fahrbahn sind. Durch dieses

Anheben der Vor- oder Nachlaufachse wird die Hinterachse je nach Beladungszustand des Nutzfahrzeugs möglicherweise zwar etwas überlastet, da dies jedoch wirklich nur für die relativ kurzen Momente eines Rangierens mit starken Lenkeinschlägen der Fall ist, kann es in Kauf genommen werden. Jedenfalls wird mit der Erfindung sichergestellt, dass sich während eines Rangierbetriebes aufgrund der angehobenen Vor- oder Nachlaufachse die nicht mehr mit der Fahrbahn in Verbindung stehenden Reifen nicht abnützen können. Der bislang hohe Reifenverschleiß lässt sich mit der Erfindung daher wirksam reduzieren.

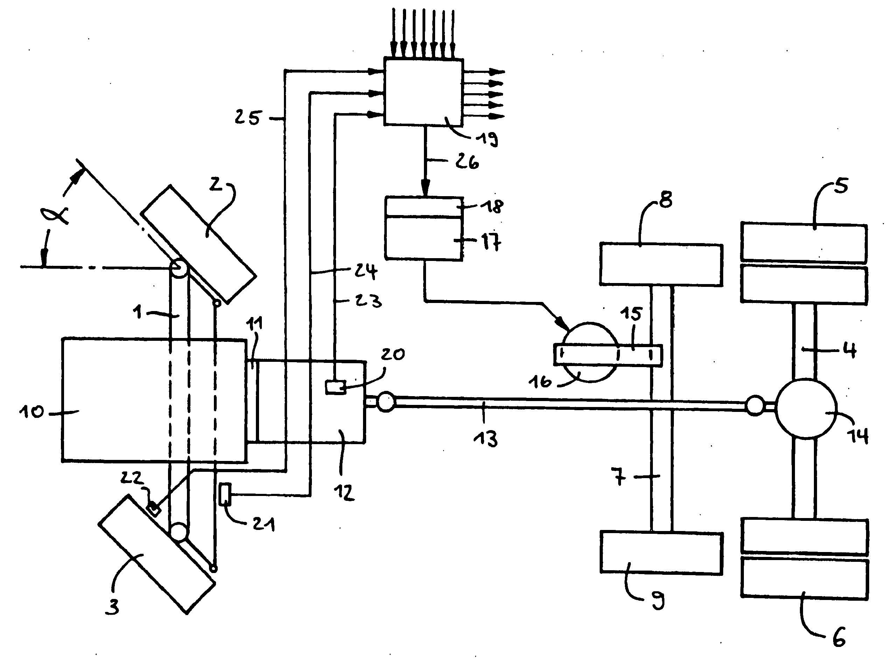

Nachstehend ist die Erfindung anhand eines in der Zeichnung dargestellten Beispiels noch näher erläutert.

In der Zeichnung sind als Teile des Nutzfahrzeuges die Vorderachse 1 mit ihren lenkbaren Vorderrädern 2, 3, die Hinterachse 4 mit ihren angetriebenen Rädern 5, 6 und eine liftbare Vorlaufachse 7 mit ihren ungelenkten Rädern 8, 9 ersichtlich. Ein Antriebsaggregat, bestehend aus einem Verbrennungsmotor 10, Kupplung 11 und Getriebe 12 ist über eine den Achskörper der Vorlaufachse 7 überquerende Kardanwelle 13 mit dem Achsdifferential 14 der Hinterachse 4 verbunden. Die Vorlaufachse 7 ist mittels eines unten im Rahmen des Nutzfahrzeuges abgestützten und oben auf eine achsfeste Konsole 15 wirkenden Luftfederbalges 16 anhebbar und absenkbar. Zur Steuerung der Befüllung des Luftfederbalges 16 mit Druckluft oder dessen Entlastung dient eine Druckluftbereitstellungseinrichtung 17 mit Steuerteil 18, die zusammen mit dem Luftfederbalg 16 die Liftvorrichtung der Vorlaufachse 7 bildet.

Als Teile der erfindungsgemäßen Vorrichtung sind folgende vorgesehen, nämlich
- eine elektronische, rechnergestützt arbeitende Steuereinrichtung 19,
- ein Getriebegangwahl-Sensor 20,
- ein Vorderradlenkwinkel-Sensor 21.
   Mit 22 sind Sensoren bezeichnet, von denen jeder einem Vorderrad 2, 3 zugeordnet ist und dessen Drehzahl erfasst. In der Zeichnung ist der Übersichtlichkeit wegen nur einer der Sensoren 22 gezeigt.
   Der Getriebegangwahl-Sensor 20 meldet der Steuereinrichtung 19 über die Signalleitung 23 den jeweils aktuell eingelegten Gang. Er kann am Getriebe 12 oder am Gangschalthebel angeordnet sein.
   Der Vorderradlenkwinkel-Sensor 21 erfasst den Lenkeinschlagwinkel α der Vorderräder 2, 3. Er kann an jeder geeigneten Stelle des Nutzfahrzeuges, z. B. im Bereich des Lenkgestänges, des Lenkgetriebes oder der Lenksäule angeordnet sein und meldet den erfassten Lenkeinschlagwinkel α über die Signalleitung 24 an die Steuereinrichtung 19.
   Der im dargestellten Beispiel je Vorderrad 2, 3 vorhandene Vorderraddrehzahl-Sensor 22 meldet über die Signalleitung 25 die Drehzahl des zugehörigen Vorderrades 2, 3 an die Steuereinrichtung 19, die dann hieraus den aktuellen Geschwindigkeitswert berechnet. Die aktuelle Geschwindigkeit kann der Steuereinrichtung 19 aber auch von anderen Quellen übermittelt oder von der Steuereinrichtung 19 aus anderen Daten errechnet werden.
   In der Steuereinrichtung 19 sind als erfindungsgemäße Steuerungskriterien folgende Zustände durch Daten abgespeichert, nämlich
- ein Gangwahlkriterium, das für den Rangierbetrieb indikativ, aber vom jeweils im Nutzfahrzeug eingebauten Getriebetyps abhängig ist, zum Beispiel der 1. Vorwärtsgang und der Rückwärtsgang, oder die beiden Gänge 1 und 2 einer Splitgruppe, sofern das Getriebe über eine solche verfügt, und der Rückwärtsgang,
- eine Fahrgeschwindigkeitsschwelle mit V_{R max} von beispielsweise 10 km/h,
- ein Mindestlenkeinschlagwinkel α_{R min} der Vorderräder 2, 3 von z. B. mindestens 20°.

Diese Steuerungskriterien werden in der Steuereinrichtung 19 während des Betriebs des Nutzfahrzeuges, also sowohl bei dessen Stillstand als auch während der Fahrt, abgefragt. Entsprechend dem erfindungsgemäßen Verfahren wird dann durch die Steuereinrichtung 19 - sobald und solange durch Erfassung einer entsprechenden Gangwahl ein Rangierbetrieb des Nutzfahrzeuges erkannt wird und die Fahrgeschwindigkeit unterhalb der festgelegten Fahrgeschwindigkeitsschwelle V_{R max} liegt und der Lenkeinschlag der Vorderräder 2, 3 den vorgegebenen Mindest-Lenkeinschlagwinkel α_{R min} übersteigt - die Mittragfunktion der Vorlaufachse 7 (oder Nachlaufachse) aufgehoben und diese in eine angehobene Stellung überführt und gehalten, in der die Räder 8, 9 außer Kontakt mit der Fahrbahn sind. Zu diesem Zweck ergeht von der Steuereinrichtung 19 über die Steuerleitung 26 ein Befehl an die Steuerung 18 der Druckluftbereitstellungsvorrichtung 17, wodurch diese zur Abgabe von Druckluft an den Luftfederbalg 16 veranlasst wird, dadurch die Vorlaufachse 7 angehoben wird und deren Räder außer Fahrbahnkontakt gebracht werden. Ein kurviger Rangierbetrieb des Nutzfahrzeugs oder ein enges Wendemanöver desselben im Niedrigstgeschwindigkeitsbereich erfolgt demnach nur auf der Vorderachse 1 und Hinterachse 4, so dass während eines solchen Betriebszustandes an der abgehobenen Vorlaufachse 7 (oder Nachlaufachse) kein Reifenverschleiß auftreten kann.

Die Mittragfunktion der Vorlaufachse 7 (oder Nachlaufachse) wird dann durch Ausgabe eines entsprechenden Befehls der Steuereinrichtung 19 wieder hergestellt, wenn jeweils über einen bestimmten vorgegebenen Zeitraum hinaus folgende Kriterien gegeben sind, nämlich
- Stillstand des Fahrzeugs ≙ Geschwindigkeit "Null" oder
- Unterschreiten des vorgegebenen Vorderradlenkeinschlagwinkels α_{R min} und/oder Überschreiten der vorgegebenen Geschwindigkeitsschwelle V_{R max}.

Durch einen daraufhin ausgegebenen Befehl der Steuereinrichtung 19 wird die Druckluftbereitstellungsvorrichtung 17 über ihre Steuerung 18 veranlasst, den Luftfederbalg 16 wieder soweit zu entlasten, dass sich die Vorlaufachse 7 (oder Nachlaufachse) wieder absenken kann, deren Räder wieder in Fahrbahnkontakt kommen können und die Mittragfunktion der Vorlaufachse 7 (oder Nachlaufachse) über die normale Luftfederung wieder einstellbar ist.

## Patentansprüche

1. Nutzfahrzeug, insbesondere Lastkraftwagen oder Omnibus, mit einer lenkbare Vorderräder tragenden Vorderachse (1) und einer angetriebenen Hinterachse, der eine liftbare, ungelenkte Räder tragende Vor- oder Nachlaufachse (7) beigeordnet ist, deren Absenken und Anheben durch eine Liftvorrichtung steuerbar ist, und mit mehreren Sensoren, deren erfasste Messwerte an eine elektronische Steuereinrichtung (19) geleitet werden, durch die bei einer Fahrgeschwindigkeit unterhalb einer festgelegten Geschwindigkeitsschwelle sowie einem Lenkeinschlag der Vorderräder (3) über einen vorgegebenen Mindesteinschlagwinkel die Lifteinrichtung zum Aufheben der Mittragfunktion der Vor- oder Nachlaufachse veranlassbar ist, **dadurch gekennzeichnet, dass** als Sensoren ein Getriebegangwahl-Sensor (20) und ein Vorderradlenkwinkel-Sensor (21) vorgesehen sind, deren erfasste Messwerte an die elektronische Steuereinrichtung (19) geleitet werden, durch die bei gangwahlmäßig erkanntern Rangierbetrieb des Nutzfahrzeuges und bei einer Fahrgeschwindigkeit unterhalb einer festgelegten Fahrgeschwindigkeitsschwelle V_{R max} ≤ 10 km/h sowie einem Mindesteinschlagwinkel α_{R min} ≥ 20° der Vorderräder (2, 3) die Lifteinrichtung (16, 17, 18) zum Aufheben der Mittragfunktion durch Anheben der Vor- oder Nachlaufachse (7) mit Außerfahrbahnkontaktbringung von deren Rädern (8, 9) veranlassbar ist, und dass durch die Steuereinrichtung (19) bei erfasstem Stillstand des Nutzfahrzeugs oder bei Unterschreiten des vorgegebenen Vorderachslenkeinschlagwinkels α_{R min} ≥ 20° und/oder bei Überschreiten der Fahrgeschwindigkeitsschwelle V_{R max} ≤ 10 km/h - jeweils über einen bestimmten vorgegebenen Zeitraum hinaus - durch Ausgabe eines entsprechenden Befehls an die Liftvorrichtung (16, 17, 18) die Mittragfunktion der Vor- oder Nachlaufachse (7) durch deren Absenken wieder herstellbar ist.

2. Verfahren zum Betrieb eines Nutzfahrzeugs, insbesondere Lastkraftwagen oder Omnibus, das eine lenkbare Vorderräder tragende Vorderachse (1), eine angetriebene Hinterachse (4) und eine dieser beigeordnete liftbare, ungelenkte Räder tragende Vor- und Nachlaufachse (7) aufweist, deren Absenken und Anheben durch eine Liftvorrichtung (16, 17, 18) steuerbar ist, wobei die Messwerte mehrerer Sensoren an eine elektronische Steuereinrichtung geleitet werden, durch die bei einer Fahrgeschwindigkeit unterhalb ein er festgelegten Geschwindigkeitsschwelle sowie einem Lenkeinschlag der Vorderräder (3) über einem vorgegebenen Mindesteinschlagwinkel die Lifteinrichtung zum Aufheben der Mittragfunktion der Vor- oder Nachlaufachse veranlassbar ist, **dadurch gekennzeichnet, dass** mittels eines Getriebegangwahl-Sensors (20) das Einlegen eines Getriebeganges erfasst und ein entsprechendes Signal an die elektronische Steuereinrichtung (19) geleitet wird, dass außerdem mittels eines Vorderradlenkwinkel-Sensors (21) der Lenkeinschlag der Vorderräder (2, 3) erfasst und ein entsprechender Messwert an die elektronische Steuereinrichtung (19) geleitet wird, und dass **dadurch** die elektronische Steuereinrichtung (19) - sobald und solange durch Erfassung des Einlegens eines für Rangierbetrieb des Nutzfahrzeugs maßgeblichen Ganges und bei einer Fahrgeschwindigkeit unterhalb einer festgelegten Fahrgeschwindigkeitsschwelle V_{R max} ≤ 10 km/h sowie eines einen Mindesteinschlagwinkels α_{R min} ≥ 20° übersteigenden Lenkeinschlages der Vorderräder (2, 3) - durch Ausgabe eines entsprechenden Befehls an die Lifteinrichtung (16, 17, 18) die Mittragfunktion der Vor- oder Nachlaufachse (7) aufgehoben und die Vor- oder Nachlaufachse (7) in eine angehobene Stellung, in der deren Räder (8, 9) außer Fahrbahnkontakt sind, überführt wird und in dieser gehalten bleibt, und dass durch die Steuereinrichtung (19) bei erfasstem Stillstand des Nutzfahrzeugs oder bei Unterschreiten des vorgegebenen Vorderachslenkeinschlagwinkels α_{R min} ≥ 20° und/oder Überschreiten der Fahrgeschwindigkeitsschwelle V_{R max} ≤ 10 km/h - jeweils über einen bestimmten vorgegebenen Zeitraum hinaus - durch Ausgabe eines entsprechenden Befehls an die Liftvorrichtung (16, 17, 18) die Mittragfunktion der Vor- oder Nachlaufachse (7) durch deren Absenken wieder herstellbar ist.

## Claims

1. Commercial vehicle, particularly a truck or bus/coach, with a front axle (1) carrying steerable front wheels and a driven rear axle to which is assigned a liftable leading or trailing axle (7) which carries non-steered wheels and whose lowering and lifting actions can be controlled by a lifting device, and with several sensors whose ascertained measured values are sent to an electronic control unit (19) through which, if the road speed is below a specified speed threshold and the steering angle of the front wheels (3) is greater than a specified minimum steering angle, the lifting device can be prompted to cancel the carrying function of the leading or trailing axle, **characterised in that** a gear-selection sensor (20) and a front-wheel steering-angle sensor (21) are provided as sensors whose ascertained measured values are sent to the electronic control unit (19) through which in shunting operations, recognised as a result of the gear selected, of the commercial vehicle at a road speed below a specified road-speed threshold V_{Rmax} ≤ 10 km/h at a minimum steering angle α_{R min} ≥ 20° of the front wheels (2, 3), the lifting device (16, 17, 18) can be prompted to cancel the carrying function of the leading or trailing axle by raising the leading or trailing axle (7) so that its wheels (8, 9) are no longer in contact with the road surface and that upon ascertainment of the commercial vehicle's being stationary or if the steering angle is smaller than the specified front-axle steering angle α_{R min} ≥ 20° and/or the specified road-speed threshold V_{Rmax} ≤ 10 km/h is exceeded - in each case beyond a certain specified period of time - the control unit (19) can restore the carrying function of the leading or trailing axle (7) can, upon a corresponding command's being sent to the lifting device (16, 17, 18) by lowering said axle.

2. Procedure for operating a commercial vehicle, particularly a truck or bus/coach, provided with a front axle (1) carrying steerable front wheels, a driven rear axle (4) and a liftable leading and trailing axle (7) which is allocated to said rear axle (4) and carries liftable, non-steered wheels and whose lowering and lifting actions can be controlled by a lifting device (16, 17, 18), whereby the measured values ascertained by several sensors are sent to an electronic control unit through which, if the road speed is below a specified speed threshold and the steering angle of the front wheels (3) is greater than a specified minimum steering angle, the lifting device can be prompted to cancel the carrying function of the leading or trailing axle, **characterised in that** gear engagement is ascertained by a gear-selection sensor (20) and a corresponding signal is sent to the electronic control unit (19), that, in addition, the steering angle of the front wheels (2, 3) is ascertained by means of a front-wheel steering-angle sensor (21) and a corresponding measured value is sent to the electronic control unit (19) and that - as soon and as long as a gear decisive for shunting operations of the commercial vehicle is ascertained as being engaged and the road speed is below a specified road-speed threshold V_{Rmax} ≤ 10 km/h and the steering angle of the front wheels (2, 3) exceeds a minimum steering angle α_{R min} ≥ 20°- the carrying function of the leading or trailing axle (7) is cancelled by the electronic control unit (19) sending a corresponding command to the lifting device (16, 17, 18), thus bringing the leading or trailing axle (7) into a raised position in which its wheels (8, 9) are no longer in contact with the road surface and is kept in said position and that upon asertainment of the commercial vehicle's being stationary or if the steering angle is smaller than the specified front-axle steering angle α_{R min} ≥ 20° and/or the specified road-speed threshold V_{Rmax} ≤ 10 km/h is exceeded - in each case beyond a certain specified period of time - the control unit (19) can restore the carrying function of the leading or trailing axle (7) can, upon a corresponding command's being sent to the lifting device (16, 17, 18) by lowering said axle.

## Revendications

1. Véhicule industriel, tel qu'en particulier un camion, car ou bus, équipé d'un essieu avant (1) portant des roues avant directrices, d'un essieu arrière moteur associé à un essieu poussé ou traîné (7) relevable, portant des roues non directrices et dont l'abaissement et le relevage peuvent être commandés au moyen d'un dispositif de relevage, et de plusieurs capteurs dont les valeurs de mesure saisies sont transmises à un dispositif électronique de commande (19) amenant, à une vitesse de translation inférieure à un seuil de vitesse défini et à un angle de braquage des roues avant (3) supérieur à un angle de braquage minimal défini, le dispositif de relevage à supprimer la fonction porteuse de l'essieu poussé ou traîné, **caractérisé en ce que** les capteurs prévus sont un capteur de rapport de boîte de vitesses sélectionné (20) et un capteur de braquage des roues avant (21) dont les valeurs de mesure saisies sont transmises à un dispositif électronique de commande (19) amenant le dispositif de relevage (16, 17, 18), lorsqu'il détecte une manoeuvre du fait du rapport de boîte de vitesses sélectionné et à une vitesse de translation inférieure à un seuil de vitesse de translation défini de V_{Rmaxi} ≤ 10 km/h et à un angle de braquage minimal des roues avant (2, 3) de α_{Rmini} ≥ 20°, à supprimer la fonction porteuse par relevage de l'essieu poussé ou traîné (7) en désolidarisant les roues (8, 9) de cet essieu de la chaussée et **en ce que** le dispositif de commande (19) réétablit, lorsqu'il détecte que le véhicule est à l'arrêt ou que l'angle de braquage de l'essieu avant passe en dessous de l'angle défini de α_{Rmini} ≥ 20° et/ou que le seuil de vitesse de translation de V_{Rmaxi} ≤ 10 km/h est dépassé pendant une durée plus longue que celle prédéterminée pour de tels cas de figure, la fonction porteuse de l'essieu poussé ou traîné (7) par abaissement de cet essieu en émettant un ordre correspondant à destination du dispositif de relevage (16, 17, 18).

2. Procédure pour l'exploitation d'un véhicule industriel, tel qu'en particulier un camion, car ou bus, équipé d'un essieu avant (1) portant des roues avant directrices, d'un essieu arrière moteur (4) et d'un essieu poussé ou traîné (7) relevable associé à cet essieu arrière, portant des roues non directrices et dont l'abaissement et le relevage peuvent être commandés au moyen d'un dispositif de relevage (16, 17, 18), auquel cas les valeurs de mesure fournies par plusieurs capteurs sont transmises à un dispositif électronique de commande amenant le dispositif de relevage, à une vitesse de translation inférieure à un seuil de vitesse défini et à un angle de braquage des roues avant (3) supérieur à un angle de braquage minimal défini, à supprimer la fonction porteuse de l'essieu poussé ou traîné, **caractérisé en ce qu'**un capteur de rapport de boîte de vitesses sélectionné (20) saisit le rapport de boîte de vitesses engagé et transmet un signal correspondant au dispositif électronique de commande (19) et, en plus, **en ce qu'**un capteur d'angle de braquage des roues avant (21) saisit le braquage des roues avant (2, 3) et transmet une valeur de mesure correspondante au dispositif électronique de commande (19), **en ce que** le dispositif électronique de commande (19) supprime, dès que et tant que l'engagement d'un rapport typique pour les manoeuvres d'un véhicule industriel est saisi et à une vitesse de translation inférieure à un seuil de vitesse de translation défini de V_{Rmaxi} ≤ 10 km/h ainsi qu'à un angle de braquage des roues avant (2, 3) supérieur à un angle de braquage minimal de α_{Rmini} ≥ 20°, la fonction porteuse de l'essieu poussé ou traîné (7) en émettant un ordre correspondant à destination du dispositif de relevage (16, 17, 18) et amène et maintient l'essieu poussé ou traîné (7) dans une position relevée dans laquelle les roues de cet essieu (8, 9) n'ont plus de contact avec la chaussée et **en ce que** le dispositif électronique de commande (19) réétablit, lorsqu'il détecte que le véhicule est à l'arrêt ou que l'angle de braquage de l'essieu avant passe en dessous de l'angle défini de α_{Rmini} ≥ 20° et/ou que le seuil de vitesse de translation de V_{Rmaxi} ≤ 10 km/h est dépassé pendant une durée plus longue que celle prédéterminée pour de tels cas de figure, la fonction porteuse de l'essieu poussé ou traîné (7) par abaissement de cet essieu en émettant un ordre correspondant à destination du dispositif de relevage (16, 17, 18).
